Europäisches Patentamt

European Patent Office

Office européen des brevets

(19)

(11) Numéro de publication: **0 188 935**
**B1**

(12)

## FASCICULE DE BREVET EUROPEEN

(45) Date de publication du fascicule du brevet:
08.02.89

(21) Numéro de dépôt: 85402422.1

(22) Date de dépôt: 05.12.85

(51) Int. Cl.⁴: **B 60 M 1/30**, H 02 G 5/00

ERRATUM

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| frotteur tout au long du joint de dilatation. | 4 | 6 | 24 | frotteur forment un prolongement des pistes conductrices (3,3') tout au long du joint de dilatation. |
|---|---|---|---|---|

Tag der Entscheidung
über die Berichtigung )
Date of decision on ) 05.12.89
rectification: )
Date de décision portant )

Ausgabe- und Veröffentlichungstag: )
Issue and publication ) 31.01.90
date: )
Date d'edition et de )
publication: )

Patbl.Nr.)
EPB no:) 90/0
Bull. no:)

**Europäisches Patentamt**

**European Patent Office**

**Office européen des brevets**

(19)

(11) Numéro de publication: **0 188 935**
**B1**

(12) **FASCICULE DE BREVET EUROPEEN**

(45) Date de publication du fascicule du brevet:
**08.02.89**

(51) Int. Cl.⁴: **B 60 M 1/30, H 02 G 5/00**

(21) Numéro de dépôt: **85402422.1**

(22) Date de dépôt: **05.12.85**

(54) Elément de barre conductrice à joint de dilatation.

(30) Priorité: **07.12.84 FR 8418716**

(43) Date de publication de la demande:
**30.07.86 Bulletin 86/31**

(45) Mention de la délivrance du brevet:
**08.02.89 Bulletin 89/6**

(84) Etats contractants désignés:
**BE CH FR GB IT LI LU NL**

(56) Documents cités:
**DE-A- 2 159 087**
**FR-A- 2 238 802**

(73) Titulaire: **Delachaux S.A., 119, Avenue Louis Roche,
F-92231 Gennevilliers (FR)**

(72) Inventeur: **Dumontet, Max, 8, rue du Pont de Pierre,
F-93500 Pantin (FR)**
Inventeur: **Pelletier, Yves, 24, Mail Alphonse Lamartine
Jouy Les Moutiers, F-95000 Cergy (FR)**

(74) Mandataire: **Martin, Jean-Jacques et al, Cabinet
REGIMBEAU 26, Avenue Kléber, F-75116 Paris (FR)**

## Description

L'invention concerne les éléments de barre conductrice à joint de dilatation, notamment pour l'alimentation électrique des engins de manutention.

Le domaine préférentiel de l'invention est celui des rails de contact, suspendus ou au sol, pour l'alimentation des engins tels que grues, ponts roulants, transconteneurs, etc... En général, de telles barres conductrices comportent des profilés rigides présentant pour un patin frotteur une piste conductrice de guidage et de frottement.

Il est nécessaire de prévoir des joints de dilatation, et de nombreuses solutions ont été proposées pour assurer la continuité électrique (de captation) et mécanique (de guidage) au niveau de ces joints.

Une solution consiste à ménager un espace libre entre les éléments de barre conductrice, et à prévoir un double frotteur porté par un chariot, le principe étant que l'un des frotteurs est toujours en contact avec la piste d'une barre conductrice lorsque l'autre franchit ledit espace libre, ce qui permet d'assurer la continuité de captation électrique au passage du joint de dilatation. Une telle solution n'est pas satisfaisante, tant techniquement qu'économiquement. Pour tenter de la perfectionner, en évitant notamment les chocs auxquels sont soumis les frotteurs au passage du joint de dilatation, il a été proposé de prévoir une piste courbe de transition entre deux éléments de barre adjacents, et un double patin frotteur monté sur son chariot avec possibilité d'un basculement; la piste courbe produit un décollement d'un patin par rapport à son niveau initial, tandis que l'autre assure la captation électrique, le franchissement du joint de dilatation étant alors amélioré. Ceci a néanmoins pour effet de compliquer la réalisation des organes de captation, et d'accroître encore le coût de fabrication.

D'autres solutions ont été orientées vers un joint de dilatation réalisé par les extrémités libres de deux profilés adjacents, ces extrémités étant en contact l'une avec l'autre de façon à assurer la continuité de la captation électrique quelle que soit leur position longitudinale relative. Il a été ainsi proposé d'entailler la barre conductrice au milieu de la piste conductrice, afin de permettre le chevauchement latéral de deux demi-profils, de façon à conserver, sur la zone de captage commune, une certaine surface de contact; en variante, une éclisse centrale coulissante a été envisagée, de préférence, avec un encastrement à ses deux extrémités pour améliorer la rigidité de l'ensemble: ces différentes solutions sont illustrées dans DE-A-2 159 087.

Une telle solution est plus satisfaisante que les précédentes, mais présente néanmoins encore des inconvénients, dont le plus important est la discontinuité du guidage du patin frotteur au passage du joint de dilatation. En effet, si l'on désire utiliser une piste en V pour participer à ce guidage, la piste en V ne se retrouve par exemple que dans la zone centrale du joint de dilatation, les zones voisines des extrémités des profilés n'offrant qu'un pan oblique, avec alternance lors du passage. Cette discontinuité du profil accélère l'usure des frotteurs, et provoque des chocs réguliers qui fatiguent les mécanismes porteurs.

Il n'est ainsi pas possible de supprimer cette discontinuité, car la longueur de la zone commune de captage est fonction des écarts entre les températures minimales et maximales d'utilisation, et des coefficients de dilatation linéaires des éléments de barre conductrice; de toutes façons les interruptions de la ligne de profilés assemblés restent nécessaires. Par ailleurs, pour assurer la continuité mécanique et surtout la rigidité, il est nécessaire de prévoir soit un système d'éclissage latéral, soit une liaison spéciale entre profilés au niveau du joint de dilatation, et malgré cela la qualité du contact latéral entre les extrémités entaillées n'est pas toujours parfaite. Il a d'ailleurs été proposé d'utiliser une ferrure provisoire de liaison entre profilés, de façon à faciliter les opérations de transport, mais ces ferrures doivent être démontées pour l'utilisation, sinon le joint de dilatation n'existe plus; cette solution n'est pas fiable, car il y a toujours le risque que le monteur omette de démonter une ferrure.

Une autre tentative pour réduire les effets des discontinuités est illustrée dans FR-A-2 238 802, avec un rail de guidage pour véhicule à coussin d'air dont les joints de dilatation sont formés par deux demi-profils verticaux à extrémités délardées pour un meilleur contact d'appui grâce à une frontière en zigzag.

Un but de l'invention est de proposer un élément de barre conductrice à joint de dilatation ne présentant pas les inconvénients des techniques antérieures mentionnés plus haut, avec un joint de dilatation performant tant du point de vue électrique que du point de vue mécanique.

Un autre but est d'obtenir un guidage optimal du patin frotteur, lors du franchissement d'un joint de dilatation, sans chocs et/ou bruits indésirables.

Un autre but est de pouvoir réaliser des barres conductrices de grande longueur, prêtes à la pose, avec un coût de production raisonnable, en particulier sensiblement abaissé par rapport aux solutions existantes comportant une piste courbe de décollement.

Il s'agit plus particulièrement d'un élément de barre conductrice à joint de dilatation, notamment pour l'alimentation électrique d'engins de manutention, comportant des profilés rigides présentant pour un patin frotteur une piste conductrice de guidage et de frottement, le joint de dilatation étant réalisé par les extrémités libres de deux profilés adjacents, lesdites extrémités libres étant en contact l'une avec l'autre de façon à assurer une continuité de guidage et de captation électrique quelle que soit leur position longitudinale relative, caractérisé par le fait que les extrémités libres présentent un système de plaquettes parallèles imbriquées, une plaquette d'une extrémité libre étant en contact avec la ou les plaquettes adjacentes de l'autre extrémité libre dans une zone centrale du joint de dilatation.

Suivant une caractéristique de l'invention, les plaquettes sont orientées dans une direction sensiblement parallèle à la direction d'application du patin frotteur contre les pistes conductrices.

De préférence, les bords des plaquettes concernés par le passage du patin frotteur forment un prolongement des pistes conductrices tout au long du joint de dilatation, et sont tels que la zone centrale du joint de dilatation présente pour le patin frotteur une surface de contact continue ayant sensiblement la même forme que la face de contact des pistes conductrices.

En particulier, lorsque l'élément de barre conductrice comporte une piste conductrice essentiellement concave (ayant par exemple la forme d'un V) ou convexe (ayant par exemple la forme d'un V renversé), il est avantageux que le joint de dilatation présente une surface de contact analogue concave, respecitvement convexe, prolongeant directement la piste conductrice des profilés rigides adjacents.

Suivant une autre caractéristique, l'élément de barre conductrice comporte en outre, du côté des profilés rigides opposé à la piste conductrice, une ferrure assurant la liaison entre deux profilés adjacents de part et d'autre du joint de dilatation, ladite liaison autorisant un coulissement relatif longitudinal des profilés sur ladite ferrure, tout en préservant l'alignement desdits profilés; la liaison coulissante peut être prévue entre la ferrure et une glissière intermédiaire de guidage solidaire du profilé rigide associé, et la ferrure de liaison peut présenter des lumières longitudinales recevant des organes saillants fixés sur la glissière intermédiaire de guidage ou sur les profilés rigides.

L'invention concerne aussi bien des éléments droits que des éléments courbes de barre conductrice: dans le premier cas, les plaquettes parallèles imbriquées sont droites, pour un mouvement relatif longitudinal rectiligne au niveau du joint de dilatation, tandis que, dans le deuxième cas, les plaquettes parallèles imbriquées sont incurvées avec le même rayon de courbure que les profilés rigides, pour un mouvement relatif longitudinal curviligne au niveau du joint de dilatation.

L'invention concerne enfin aussi une barre conductrice comportant une pluralité d'éléments à joint de dilatation: une telle barre est remarquable en ce qu'elle forme une unité fonctionnelle prête à la pose, et qu'elle présente un nombre prédéterminé de joints de dilatation choisi en fonction de la longueur totale de la ligne à réaliser.

D'autres caractéristiques et avantages de l'invention apparaîtront plus clairement à la lumière de la description qui va suivre et du dessin annexé, se référant à un mode particulier de réalisation, pour lequel:

la fig. 1 est une vue en perspective d'un élément de barre conductrice à joint de dilatation conforme à l'invention;

la fig. 2 est une coupe transversale partielle selon II-II de la fig. 1, illustrant la zone centrale du joint de dilatation, pour laquelle les plaquettes parallèles des deux extrémités sont concernées;

la fig. 3 est une coupe transversale selon III-III de la fig. 1, illustrant une autre zone du joint de dilatation pour laquelle les plaquettes parallèles d'une seule extrémité sont concernées;

la fig. 4 est une vue de dessous de l'élément de barre de la fig. 1, illustrant un exemple de mode de liaison coulissante.

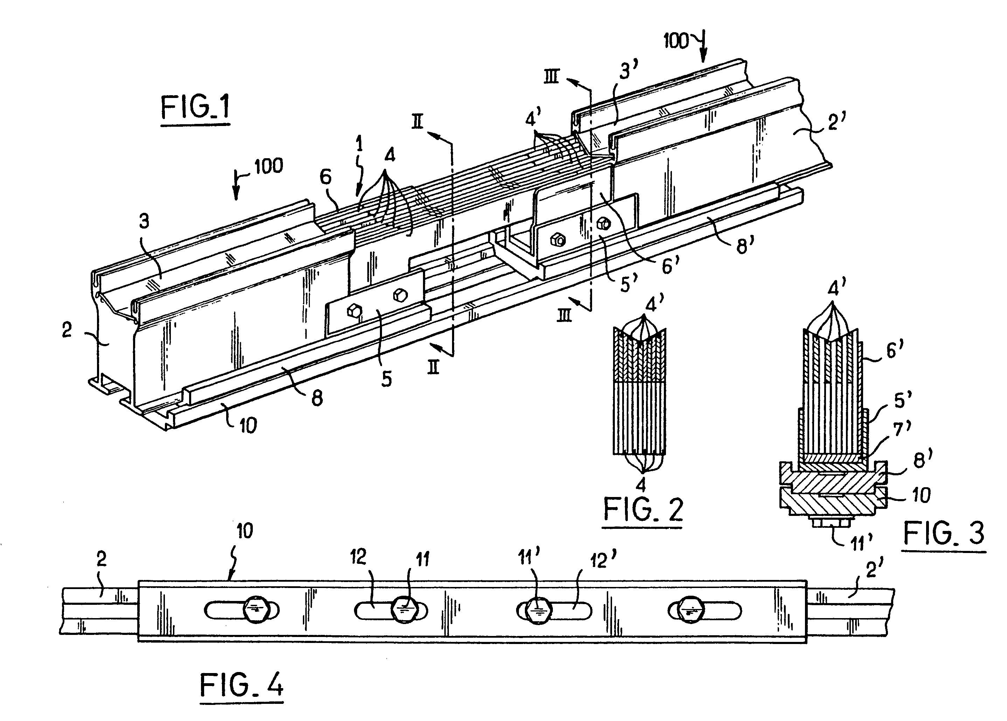

La fig. 1 illustre un mode de réalisation préférentiel de l'invention. Il s'agit d'un élément de barre conductrice 1 à joint de dilatation, du type de ceux servant à réaliser une ligne pour l'alimentation des engins de manutention (grues, ponts roulants, transconteneurs, etc...). L'élément de barre conductrice 1 comporte des profilés rigides 2, 2', par exemple en aluminium, présentant pour un patin frotteur (non représenté) une piste conductrice 3, 3' de guidage et de frottement. Les pistes conductrices 3, 3' sont ici réalisés, à titre d'exemple, selon une bande concave à section transversale en forme de V, clipsée sur les profilés rigides. Il faut bien voir que le problème de la continuité électrique au niveau du joint de dilatation est avant tout un problème de continuité de la captation, la continuité électrique proprement dite entre profilés étant assurée de façon classique par une tresse ou un câble souple de liaison (non représenté ici).

Conformément à un aspect fondamental de l'invention, les extrémités libres des profilés 2, 2' présentent un système de plaquettes parallèles imbriquées 4, 4', formant joint de dilatation, une plaquette d'une extrémité libre étant en contact avec la ou les plaquettes adjacentes de l'autre extrémité libre dans une zone centrale du joint de dilatation.

Il est à noter que les plaquettes parallèles pourraient être organisées selon des plans perpendiculaires à la direction d'application (flèches 100) du patin frotteur contre les pistes conductrices; on aurait ainsi par exemple des plaquettes en V imbriquées, ayant un profil transversal analogue à celui des pistes conductrices, auquel cas seule la plaquette extrême serait concernée par le patin frotteur. Cependant, une organisation du système de plaquettes essentiellement parallèle à la direction d'application du patin frotteur, qui est celle illustrée ici, présente des avantages très supérieurs. En effet, les bords des plaquettes 4, 4' concernés par le passage du patin frotteur peuvent former un prolongement direct des pistes conductrices 3, 3' tout au long du joint de dilatation.

La zone centrale du joint de dilatation présente aussi une surface de contact continue (fig. 2), ayant sensiblement la même forme, (ici en V) que les pistes conductrices. Les zones voisines, concernées par les plaquettes parallèles d'une seule extrémité de profilé, présentant aussi une forme de guidage en V, ainsi que cela est visible à la fig. 3, de sorte qu'il n'y a aucune discontinuité de guidage au passage du joint de dilatation, ce qui est très avantageux pour éviter les chocs et/ou bruits indésirables lors de ce passage, la continuité électrique de captation étant par ailleurs assurée avec une grande fiabilité.

Il va de soi que le système de plaquettes parallèles imbriquées comme deux peignes opposés, peut comporter un nombre variable de plaquettes, selon le type de face de contact que l'on désire, le minimum étant une seule plaquette s'insérant entre deux plaquettes opposées. Ici, il a été représenté un système comportant deux fois cinq plaquettes, ce qui permet de définir très bien un contour en V grâce à un biseautage approprié des bords des plaquettes, et ce surtout en dehors de la zone centrale du joint de dilatation. Ces plaquettes sont réalisées en matériau bon conducteur de l'électricité, par exemple en cuivre ou alliage de cuivre.

De même, le contour transversal, ici concave en V, peut être différent; avec une piste conductrice convexe par exemple, en particulier en V renversé ou en arc de cercle, le système de plaquettes présentera un contour analogue, grâce à un biseautage correspondant (le patin frotteur présente alors naturellement une surface de contact adaptée).

Pour la tenue mécanique du système de plaquettes, il est possible de prévoir, comme cela a été illustré, des cornières 5, 5', ici en U, recevant chaque série de plaquettes parallèles, avec des plaques conductrices latérales 6, 6' et de base 7, 7' (la plaque de base 7 n'est pas visible ici, mais la référence est donnée pour respecter la symétrie). En outre, chaque profilé 2, 2' est solidaire d'une glissière intermédiaire de guidage 8, 8' respectivement, les cornières en U 5, 5' s'appuyant directement sur leur glissière associée. L'élément de barre conductrice 1 comporte enfin une ferrure 10 assurant la liaison entre les profilés adjacents, cette liaison autorisant un coulissement relatif longitudinal des profilés 2, 2', par exemple au moyen de boulons 11, 11' dont la tige se déplace dans les lumières oblongues 12, 12' que présente la ferrure de liaison. Le coulissement se fait entre les glissières intermédiaires 8, 8' et la ferrure de liaison 10, avec de préférence interposition de graisse conductrice.

La ferrure de liaison 10 intervient au montage en usine des éléments de barre, en assurant la tenue mécanique d'ensemble au niveau du joint de dilatation, ce qui permet un transport aisé sans risque de tordre les plaquettes imbriquées; mais en outre, et c'est là une différence importante par rapport aux techniques antérieures, la ferrure de liaison 10 ne doit pas être démontée, en raison de sa fonction essentielle qui est d'assurer la continuité mécanique et de préserver l'alignement au niveau du joint de dilatation, une fois les éléments de barre montés.

Il est ainsi possible de réaliser selon l'invention une barre conductrice comportant une pluralité d'éléments de barre à joint de dilatation, une telle barre formant une unité fonctionnelle prête à la pose, et présentant un nombre prédéterminé de joints de dilatation choisi en fonction de la longueur totale de la ligne à réaliser.

Il est à noter que la dilatation transversale des plaques est tout à fait négligeable, de sorte que les plaquettes imbriquées restent en contact, sans risque de coincement.

Le mode de réalisation décrit et illustré concernant un élément de barre droit, pour lequel les plaquettes parallèles imbriquées sont droites en vue d'un mouvement relativ longitudinal rectiligne au niveau du joint de dilatation. Il est aussi envisageable dans le cadre de l'invention, de prévoir un élément de barre courbe, avec des plaquettes parallèles imbriquées qui sont alors incurvées avec le même rayon de courbure que les profilés rigides, en vue d'un mouvement relatif longitudinal curviligne au niveau du joint de dilatation.

L'invention n'est pas limitée aux modes de réalisation qui viennent d'être décrits, mais englobe toute variante reprenant, avec des moyens équivalents, les caractéristiques essentielles figurant aux revendications.

## Revendications

1. Elément de barre conductrice à joint de dilatation, notamment pour l'alimentation électrique d'engins de manutention, comportant des profilés rigides (2, 2') présentant pour un patin frotteur une piste conductrice (3, 3') de guidage et de frottement, le joint de dilatation étant réalisé par les extrémités libres de deux profilés adjacents, lesdites extrémités libres étant en contact l'une avec l'autre de façon à assurer une continuité de guidage et de captation électrique quelle que soit leur position longitudinale relative, caractérisé par le fait que les extrémités libres présentent un système de plaquettes parallèles imbriquées (4, 4'), une plaquette d'une extrémité libre étant en contact avec la ou les plaquettes adjacentes de l'autre extrémité libre dans une zone centrale du joint de dilatation.

2. Elément de barre conductrice selon la revendication 1, caractérisé par le fait que les plaquettes (4, 4') sont orientées dans une direction sensiblement parallèle à la direction d'application du patin frotteur contre les pistes conductrices (3, 3').

3. Elément de barre conductrice selon la revendication 2, caractérisé par le fait que les bords des plaquettes (4, 4') concernés par le passage du patin frotteur tout au long du joint de dilatation.

4. Elément de barre conductrice selon la revendication 3, caractérisé par le fait que les bords des plaquettes (4, 4') sont tels que la zone centrale du joint de dilatation présente pour le patin frotteur une surface de contact continue ayant sensiblement la même forme que la face de contact des pistes conductrices (3, 3').

5. Elément de barre conductrice comportant une piste conductrice essentiellement concave, notamment ayant la forme d'un V, selon la revendication 4, caractérisé par le fait que le joint de dilatation présente une surface de contact concave analogue prolongeant directement la piste conductrice (3, 3') des profilés rigides adjacents (2, 2').

6. Elément de barre conductrice comportant une piste conductrice essentiellement convexe, notamment ayant la forme d'un V renversé, selon la revendication 4, caractérisé par le fait que le joint de dilatation présente une surface de contact convexe analogue prolongeant directement la piste conductrice (3, 3') des profilés rigides adjacents (2, 2').

7. Elément de barre conductrice selon l'une des revendications 1 à 6, caractérisé par le fait que les plaquettes parallèles (4, 4') sont fixées sur une cornière (5, 5') solidaire de l'extrémité libre du profilé rigide associé.

8. Elément de barre conductrice selon l'une des revendications 1 à 7, caractérisé par le fait qu'il comporte en outre, du côté des profilés rigides opposés à la piste conductrice, une ferrure (10) assurant la liaison entre deux profilés adjacents (2, 2') de part et d'autre du joint de dilatation, ladite liaison autorisant un coulissement relatif longitudinal des profilés sur ladite ferrure (10) tout en préservant l'alignement desdits profilés.

9. Elément de barre conductrice selon la revendication 8, caractérisé par le fait que la liaison coulissante est prévue entre la ferrure (10) et une glissière intermédiaire de guidage (8, 8') solidaire du profilé rigide (2, 2') associé.

10. Elément de barre conductrice selon la revendication 9, caractérisé par le fait que la ferrure de liaison (10) présente des lumières longitudinales (12, 12') recevant des organes saillants (11, 11') fixés sur la glissière intermédiaire de guidage ou sur les profilés rigides.

11. Elément droit de barre conductrice selon l'une des revendications 1 à 10, caractérisé par le fait que les plaquettes parallèles imbriquées sont droites, pour un mouvement relatif longitudinal rectiligne au niveau du joint de dilatation.

12. Elément courbe de barre conductrice selon l'une des revendications 1 à 10, caractérisé par le fait que les plaquettes parallèles imbriquées sont incurvées avec le même rayon de courbure que les profilés rigides, pour un mouvement relatif longitudinal curviligne au niveau du joint de dilatation.

13. Elément conductrice comportant une pluralité d'éléments à joint de dilatation selon l'une des revendications précédentes, caractérisé par le fait qu'elle forme une unité fonctionnelle prête à la pose, et qu'elle présente un nombre prédéterminé de joints de dilatation choisi en fonction de la longueur totale de la ligne à réaliser.

**Patentansprüche**

1. Stromschienenelement mit Dehnungsverbinder, insbesondere für die elektrische Versorgung von Fördereinrichtungen, mit starren Profilen (2, 2'), welche eine Leiterbahn zur Führung und Reibung (3, 3') für einen Stromabnehmerschuh darstellt, und der Dehnungsverbinder realisiert ist durch die freien Enden der zwei benachbarten Profile, wobei die genannten freien Enden eines mit dem anderen in Kontakt sind, so dass eine Kontinuität von Führung und elektrischer Leitung gesichert ist, wie auch immer ihre relative Längsposition sei, dadurch gekennzeichnet, dass die freien Enden ein System aus parallelen verschachtelten Platten (4, 4') bilden, und eine Platte eines freien Endes mit der oder den benachbarten Platten des anderen freien Endes in einem zentralen Bereich des Dehnungsverbinders in Kontakt ist.

2. Stromschienenelement nach Anspruch 1, dadurch gekennzeichnet, dass die Platten (4, 4') in einer Richtung orientiert sind, welche im wesentlichen parallel ist zu der Richtung, in welcher der Stromabnehmerschuh gegen die Leiterbahnen (3, 3') anliegt.

3. Stromschienenelement nach Anspruch 2, dadurch gekennzeichnet, dass die Ränder der Platten (4, 4'), welche von der Passage des Stromabnehmerschuhs betroffen sind, eine Verlängerung der Leiterbahnen (3, 3') längs des ganzen Dehnungsverbinders bilden.

4. Stromschienenelement nach Anspruch 3, dadurch gekennzeichnet, dass die Ränder der Platten (4, 4') so sind, dass der zentrale Bereich des Dehnungsverbinders für den Stromabnehmerschuh eine kontinuierliche Kontaktoberfläche darstellt, welche im wesentlichen die gleiche Form wie die Kontaktfläche der Leiterbahnen (3, 3') hat.

5. Stromschienenelement mit einer im wesentlichen konkaven Leiterbahn, insbesondere in Form eines V, nach Anspruch 4, dadurch gekennzeichnet, dass der Dehnungsverbinder eine analoge konkave Kontaktoberfläche aufweist, welche die Leiterbahnen (3, 3') der starren benachbarten Profile (2, 2') direkt verlängert.

6. Stromschienenelement mit einer im wesentlichen konvexen Leiterbahn, insbesondere in Form eines umgekehrten V, nach Anspruch 4, dadurch gekennzeichnet, dass der Dehnungsverbinder eine analoge konvexe Kontaktoberfläche aufweist, welche die Leiterbahnen (3, 3') der starren benachbarten Profile (2, 2') direkt verlängert.

7. Stromschienenelement nach einem der Ansprüche 1 bis 6, dadurch gekennzeichnet, dass die parallelen Platten (4, 4') an einem Winkelprofil befestigt sind, welches mit dem freien Ende des zugeordneten starren Profils fest verbunden ist.

8. Stromschienenelement nach einem der Ansprüche 1 bis 7, dadurch gekennzeichnet, dass es ferner umfasst: an der zur Leiterbahn entgegengesetzten Seite der starren Profile einen Beschlag (10), welcher die Verbindung zwischen zwei benachbarten Profilen (2, 2') auf beiden Seiten des Dehnungsverbinders sichert, welche Verbindung ein relatives Längsgleiten der Profile auf dem genannten Beschlag (10), unter Bewahrung der Ausrichtung der genannten Profile, erlaubt.

9. Stromschienenelement nach Anspruch 8, dadurch gekennzeichnet, dass die gleitende Verbindung zwischen dem Beschlag (10) und einer mit dem zugeordneten starren Profil (2, 2') fest verbundenen Zwischen-Gleitführung (8, 8') vorgesehen ist.

10. Stromschienenelement nach Anspruch 9, dadurch gekennzeichnet, dass der Verbindungsbeschlag (10) längliche Öffnungen (12, 12') aufweist, welche vorstehende Organe (11, 11') aufnehmen, welche an der Zwischen-Gleitführung oder an den starren Profilen befestigt sind.

11. Gerades Stromschienenelement nach einem der Ansprüche 1 bis 10, dadurch gekennzeichnet, dass die verschachtelten parallelen Platten gerade sind, für eine geradlinige relative Längsbewegung im Bereich des Dehnungsverbinders.

12. Gekrümmtes Stromschienenelement nach einem der Ansprüche 1 bis 10, dadurch gekennzeichnet, dass die verschachtelten parallelen Platten mit demselben Krümmungsradius gekrümmt sind wie die starren Profile, für eine krummlinige relative Längsbewegung im Bereich des Dehnungsverbinders.

13. Stromschiene mit einer Vielzahl von Elementen mit Dehnungsverbindern nach einem der vorhergehenden Ansprüche, dadurch gekennzeichnet, dass sie eine fertig anbringbare funktionelle Einheit bildet, und dass sie eine vorbestimmte Anzahl von Dehnungsverbindern aufweisen, welche in Abhängigkeit von der Gesamtlänge der zu realisierenden Reihe gewählt wurde.

**Claims**

1. A conductive rail component having an expansion point, in particular for supplying electricity to handling equipment, said rail component comprising rigid section bars (2, 2') each providing a conductive

5

guidance and friction track (3, 3') for a friction shoe, the expansion joint being constituted by the free ends of two adjacent section bars, said free ends being in contact with each other to provide guidance continuity and electrical pickup continuity regardless of their relative longitudinal positions, characterized in that the free ends of the section bars comprise systems of interfitting parallel plates (4, 4'), with each bar end plate coming in contact with one or two of the adjacent plates at the free end of an adjacent bar over a central zone of the expansion joint.

2. A conductive rail according to claim 1, characterized in that the plates (4, 4') are oriented in a direction which is substantially parallel to the direction in which a friction shoe presses against the conductive paths (3, 3').

3. A conductive rail according to claim 2, characterized in that the edges of the plates (4, 4') which engage a friction shoe constitute extensions of the conductive paths (3, 3') over the entire length of the expansion joint.

4. A conductive rail according to claim 3, characterized in that the edges of the plates (4, 4') are such that the central zone of the expansion joint provides the friction shoe with a continuous contact surface having substantially the same shape as the contact face of the conductive paths (3, 3').

5. A conductive rail according to claim 4, and having a conductive path which is substantially concave, and in particular which is generally V-shaped, characterized in that the expansion joint presents a concave contact surface of similar shape which directly extends the conductive paths (3, 3') of the adjacent rigid section bars (2, 2').

6. A conductive rail according to claim 4, and having a conductive path which is substantially convex, and in particular which is generally V-shaped, characterized in that the expansion joint presents a convex contact surface of similar shape which directly extends the conductive paths (3, 3') of the adjacent rigid section bars (2, 2').

7. A conductive rail according to any one of claims 1 to 5, characterized in that the parallel plates (4, 4') are fixed to a bracket (5, 5') which is itself fixed to the free end of the associated rigid section bar.

8. A conductive rail according to any one of claims 1 to 7, characterized in that it further includes a connection fitting (10) connected to the rigid section bars on their sides opposite to the conductive track, said fitting interconnecting two adjacent section bars (2, 2') across the expansion joint, said connection allowing relative longitudinal sliding between the section bars over said fitting (10) while ensuring constant alignment of said section bars.

9. A conductive rail according to claim 8, characterized in that the sliding connection is provided between the connection fitting (10) and an intermediate guide slideway (8, 8') which is fixed to an associated one of the rigid section bars (2, 2').

10. A conductive rail according to claim 9, characterized in that the connection fitting (10) has longitudinal slots (12, 12') receiving projecting members (11, 11') fixed on the intermediate guide slideway or on the rigid section bars.

11. A rectilinear rail according to any one of claims 1 to 10, characterized in that the interfitting parallel plates are rectilinear, to enable longitudinal rectilinear relative movement at the expansion joint.

12. A curved conductive rail according to any one of claims 1 to 10, characterized in that the interfitting parallel plates are curved having the same center of curvature as the rigid section bars, to enable curvilinear longitudinal relative movement at the expansion joint.

13. A conductive rail comprising a plurality of expansion joints and in accordance with any preceding claims, characterized in that said rails constitute a functional unit relative for installation as a whole, and have a number of expansion joints which is predetermined as a function of the total length of the rails to be installed.

FIG.1

100

III

3'

4'

II

6

1

4

100

3

8'

6'

2

5'

2'

5

III

8

II

4'

4'

10

5

6'

5'

7'

8'

10

4

FIG. 2

11'

FIG. 3

10

2

12

11

11'

12'

2'

FIG. 4

EP 0 188 935 B1